# EUROPEAN PATENT SPECIFICATION

(11) **EP 3 417 148 B1**
(45) Date of publication and mention of the grant of the patent: **13.01.2021**
(21) Application number: 16707167.9
(22) Date of filing: 19.02.2016
(51) Int. Cl.: E21C 35/02, B65G 41/00

(54) **LOCKING OF A PROCESSING APPARATUS**
VERRIEGELUNG EINER VERARBEITUNGSVORRICHTUNG
VERROUILLAGE D'UN APPAREIL DE TRAITEMENT

(43) Date of publication of application: 26.12.2018
(73) Proprietor: Metso Minerals, Inc., 33900 Tampere (FI)
(72) Inventor: TULONEN, Pasi, 37100 Nokia (FI); SALMINEN, Vesa-Matti, 37830 Akaa (FI); JUUTINEN, Tuomas, 33710 Tampere (FI)
(74) Representative: Espatent Oy
(86) International application number: PCT/FI2016/050107
(87) International publication number: WO 2017/140940

(56) References cited:
- WO-A1-2015/033013
- US-A- 1 310 187
- US-A- 4 287 692

## Description

### FIELD OF INVENTION

The invention generally relates to a locking arrangement for a processing apparatus of a processing plant.

### BACKGROUND OF THE INVENTION

Mineral material, such as stone, is retrieved to be processed from the ground either by exploding or by digging. The mineral material may also comprise natural stone, gravel and construction waste. Both mobile and fixed plants are used for processing. The material to be processed is fed with e.g. an excavator or a wheel loader into a feed hopper of the processing plant, from where the material is forwarded to be processed.

In mineral material processing, the material processed or to be processed is commonly conveyed on conveyors. Often the height of these conveyors is be adjusted in order to provide a suitable unloading or loading height, or due to transport requirements. The angle, i.e. height, of further processing apparatuses is also adjusted. This adjustment is often carried out hydraulically.

The angle of processing apparatuses has previously been locked by manual insertion of suitable bolts or the like to keep the conveyor in place. However, insertion of such bolts is time consuming and might present a safety hazard. An example of a previous safety arrangement has been shown in publication US 4 287 692 A.

Furthermore, during processing or movement of the processing plant, the processing apparatus experiences forces in side and longitudinal direction, the movement resulting from which has not been prevented with manual locking of the height.

The objective of the invention is to provide a locking arrangement for a processing apparatus that mitigates the problems of the prior art.

### SUMMARY

According to a first aspect of the invention there is provided a locking arrangement for a processing apparatus, according to the appended claim 1.

The first actuator may be configured to lower the processing apparatus in such a way that the locking element is supported on the lower surface of a slot in order to hinder downward movement of the processing apparatus.

The first actuator may be configured to lower the processing apparatus in such a way that the locking element is supported on a beam connected to the support element in order to hinder downward movement of the processing apparatus.

The lower surface of the slots may comprise a groove configured to engage the locking bar in a form fitting manner in order to hinder longitudinal movement of the processing apparatus.

The first actuator may be configured to hinder upward movement of the processing apparatus.

The side locking element may be formed as an integral part of the locking element.

The processing apparatus may comprise a conveyor, a feeder or a screen.

The first and/or the second actuator is a hydraulic, electronic or pneumatic cylinder.

According to a second aspect of the invention there is provided a mineral material processing plant comprising a processing apparatus and a locking arrangement according to the first aspect of the invention.

The processing apparatus may comprises a conveyor, a feeder or a screen. The mineral material processing plant may comprise a mobile plant.

According to a third aspect of the invention there is provided a method of locking a processing apparatus, according to the appended claim 12.

The method may further comprise lowering the processing apparatus with the first actuator so that the locking element is supported on the lower surface of the slot.

The method may further comprise lowering the processing apparatus with the first actuator so that the locking element is supported on a beam connected to the support element.

Engaging the slot may comprises the locking element engaging a groove on the lower surface of the slot in a form fitting manner in order to hinder longitudinal movement of the processing apparatus.

The processing apparatus may comprises a conveyor, a feeder or a screen.

### BRIEF DESCRIPTION OF THE DRAWINGS

The invention will now be described, by way of example, with reference to the accompanying drawings, in which:
Fig. 1 shows a partial schematic view of a mineral material processing plant and conveyor with a conveyor locking arrangement according to an embodiment of the invention;
Fig. 2 shows a schematic side view of a processing apparatus locking arrangement according to an embodiment of the invention;
Fig. 3a shows an enlarged schematic side view of a processing apparatus locking arrangement according to an embodiment of the invention;
Fig. 3b shows an enlarged schematic top view of a processing apparatus locking arrangement according to an embodiment of the invention;
Fig. 4 shows a flow chart of a processing apparatus locking method according to an embodiment of the invention; and
Fig. 5 shows a mineral material processing plant according to an embodiment of the invention.

### DETAILED DESCRIPTION

In the following description, like numbers denote like elements. It should be appreciated that the illustrated figures are not entirely in scale, and that the figures mainly serve the purpose of illustrating embodiments of the invention.

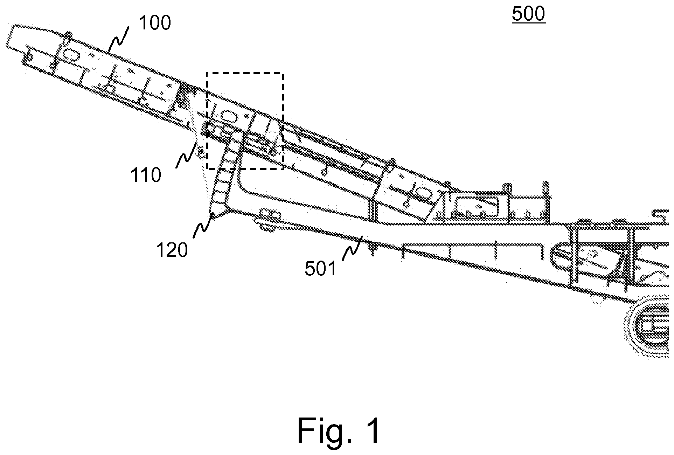

Fig. 1 shows a partial schematic view of a mineral material processing plant and conveyor with a processing apparatus locking arrangement according to an embodiment of the invention. It is to be noted that although the embodiments of the invention have been explained with reference to a conveyor, the locking arrangement is applicable to any angle adjustable processing apparatus. Fig. 1 shows a partial view of a mineral material processing plant 500, in which the arrangement according to an embodiment of the invention is in use. The mineral material processing plant 500 comprises among others a frame 501 and a processing apparatus, e.g. a conveyor 100. The processing apparatus in question can alternatively be for example a screening device with one or several screen decks or a feeder, like a vibrating feeder, a bar screen, or a chute. In an embodiment, the conveyor comprises a belt conveyor. Fig. 1 shows the conveyor 100 as a discharge conveyor, but embodiments of the invention are used in conveyors of varying purpose and type.

Fig. 1 shows a first actuator, in an embodiment a hydraulic cylinder, jack, or ram, 110 configured to raise and lower the conveyor, that is one end of the conveyor is attached to the frame of the mineral material processing plant in a pivotable manner and the first hydraulic ram 110 raises or lowers the conveyor in such a way that the free end of the conveyor rises or lowers and the angle of the conveyor changes. The frame 501 of the crusher comprises a support element 120 with the aid of which the conveyor is locked in place as explained hereinafter. In a further example embodiment, the support element 120 is attached to the conveyor.

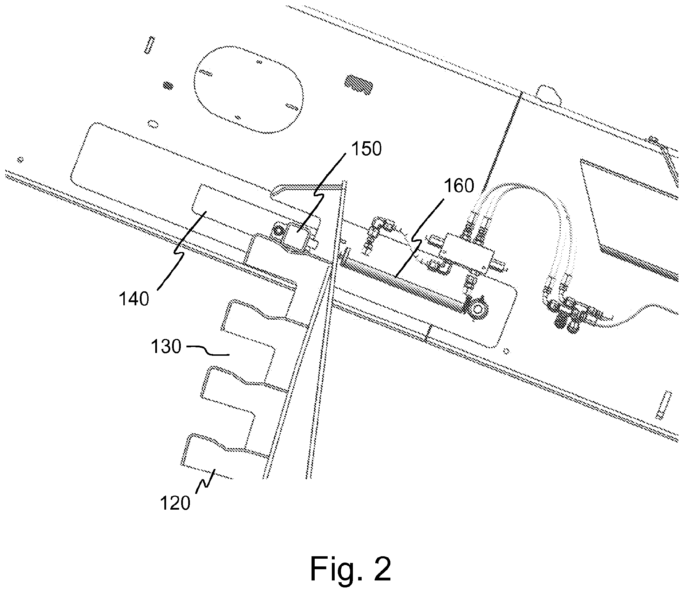

Fig. 2 shows a schematic side view of a processing apparatus locking arrangement according to an embodiment of the invention. Fig. 2 shows the portion of the mineral material processing plant 500 surrounded with a dashed line in Fig. 1. Although only one side of the mineral material processing plant is shown in the Figs, the support element 120 is in an embodiment provided on both sides of the conveyor 100.

Fig. 2 shows the support element 120 comprising slots, or indentations, 130 the surfaces of which form a type of shelves. The support element 120 comprises a plurality of slots 130 on different vertical heights configured to provide for locking at different positions of the conveyor. Fig. 2 further shows a locking element, in an embodiment a locking bar 150 configured to be movable in a slot, or an aperture, 140 actuated by a second actuator, in an embodiment a hydraulic cylinder jack, or ram, 160. The locking bar 150 in an embodiment extends from one side of the conveyor to the other side thereof and engages with the support element on both sides of the conveyor. In an embodiment, the support element 120 is attached to the conveyor 100 and the locking bar 150, the slot 140 and the hydraulic ram are formed in the frame 501 of the mineral material processing plant. The locking bar 150 in an embodiment comprises a surface against the conveyor frame in order to prevent lateral movement of the locking bar 150 with respect to the conveyor 100. The locking bar 150 is in a further embodiment shaped like a plate or a rod. In an embodiment, the hydraulic ram 160 is provided on both sides of the conveyor 100.

In an embodiment, instead of the first 110 and/or 160 hydraulic ram, an electrically or pneumatically actuated element is used. The hydraulic ram 160 is configured when actuated to move the locking bar 150 in the slot 140 in such away that the locking bar engages a slot 130 of the support element 120 in such a way that the movement of the conveyor 100 is prevented at least in one direction.

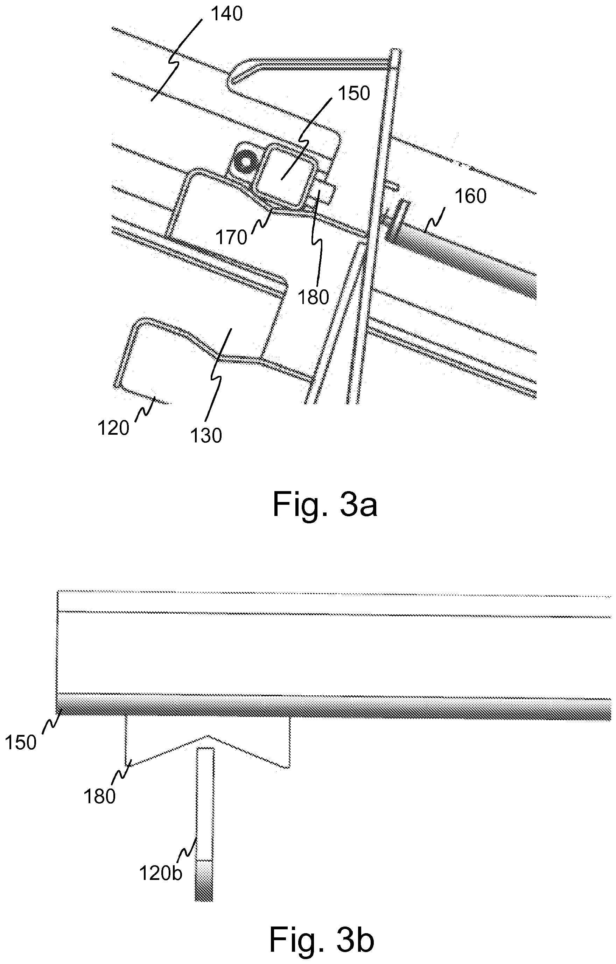

Fig. 3a shows an enlarged schematic side view of a processing apparatus locking arrangement according to an embodiment of the invention. Fig. 3a shows the support element 120 with the slots 130 and the bar 150 configured to be movable in the slot 140 actuated by the hydraulic ram 160. The lower surface of the slots 130 comprises in an embodiment a recess, indentation or groove 170 configured to accommodate the bar 150 in such a way that the movement of the bar and consequently the movement of the conveyor in longitudinal direction is prevented or hindered, i.e. the bar 150 is held in place by the groove 170. The lower surface of the slot 130 is configured to support the bar 150 and therethrough the conveyor 100 in such a way that downward movement of the conveyor is prevented or hindered.

Fig. 3a further shows a side locking element 180 attached to the bar 150, or formed as an integral part thereof and configured to accommodate a part of the support element 120 in order to prevent or hinder sideways movement of the bar 150 and therethrough that of the conveyor 100 with respect to the support element 120. In a further embodiment, the support element 120 comprises a plurality of beam shaped surfaces, for example rectangular or round in shape and hollow or solid in structure, and the bar 150 has a mating surface, that creates a mating contact with the beam shaped surfaces of the support element 120 in a form fitting manner. In a still further embodiment, the support element 120 and the slots 130 are manufactured of a thick metal plate by flame cutting or laser cutting or by other suitable methods.

Fig. 3b shows an enlarged schematic top view of a processing apparatus locking arrangement according to an embodiment of the invention. Fig 3b shows the bar 150 with the side locking element 180. The side locking element 180 comprises a groove or indentation configured to accommodate a part of the support element 120, i.e. a plate element 120b at the back wall of the slot 130. The element 180 engages the support element in a form fitting manner. In an embodiment, the element 180 is formed as an integral part of the bar 150, i.e. the bar 150 comprises a groove or a bend configured to accommodate the part 120b. In a further embodiment, the support element 120 comprises the side locking element 180 and the locking bar 150 comprises an element configured to engage the side locking element 120 in a form fitting manner.

In an embodiment, the locking bar 150 is a straight bar extending below the conveyor to the support element 120 on both sides. In a further example embodiment, the locking bar 150 comprises as an integral part thereof the side locking element 180, i.e. a groove, indentation or a bend is formed into the bar. In a still further embodiment, the locking bar 150 comprises a groove, indentation or a bend corresponding to the groove 170, i.e. the lower surface of the slot has an element, e.g. a protrusion, that is to be accommodated in a form fitting manner in the groove of the bar 150.

Accordingly, as hereinbefore explained, the locking arrangement provides for locking of the conveyor in three directions, i.e. sideways, in longitudinal direction and in vertical direction, using form fitting engagement of the above explained elements. The upward movement of the conveyor is in an embodiment prevented with the first hydraulic ram 110 using a valve arrangement (not shown) configured to keep the ram in a certain position. Furthermore, the locking arrangement prevents the conveyor from twisting or bending as well.

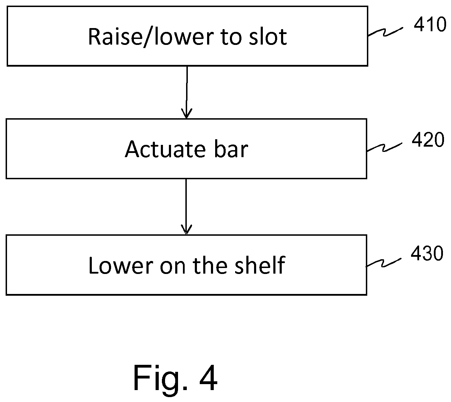

Fig. 4 shows a flow chart of a processing apparatus locking method according to an embodiment of the invention. At 410 the conveyor is raised or lowered to the desired position by actuating the first hydraulic ram 110. The desired position is chosen in such away that the conveyor is at a level with a slot 130 of the support element 120. At 420 the bar 150 is actuated with the hydraulic ram 160 in such a way that the side locking element 180 engages in a form fitting engagement the part 120b of the support element 120. In an embodiment, simultaneously the bar 150 slides into the groove 170 in the lower surface of the slot 130 to form a form-fitting engagement. At 420, the first hydraulic ram 110 is actuated, if needed, so that the bar 150 rests at the shelf formed by the lower surface of the slot 130 of the supporting element. In order to unlock the conveyor, the steps are carried out in opposite order.

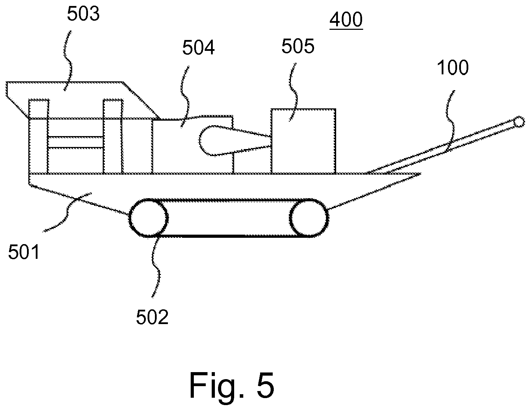

Fig. 5 shows a mobile mineral material processing plant 500 according to the invention comprising a feeder 503 for feeding material into a crusher 504, and a conveyor 100 according to an embodiment of the invention for conveying the crushed product further away from the processing plant and comprising the locking arrangement (not shown) according to an embodiment of the invention. The processing plant 500 further comprises a power source and a control centre 505. The power source may be for example a diesel or electric engine that provides energy for the process units and hydraulic circuits.

The feeder, the crusher, the power source and the conveyor are attached to a frame 501 which in this embodiment further comprises a track base 502 for moving the processing plant. The processing plant may also be completely or in part wheel-based or movable on legs. Alternatively, it may be movable or towable with for example a truck or other external power source. In addition to the hereinbefore, the processing plant may also be a fixed processing plant. Without in any way limiting the scope of protection, interpretation or possible applications of the invention, a technical advantage of different embodiments of the invention may be considered to be the provision of conveyor locking in three directions. Further, a technical advantage of different embodiments of the invention may be considered to be easier and safer locking of the conveyor. Still further, a technical advantage of different embodiments of the invention may be considered to be an increased lifetime of the conveyor as wear due to undesired movement is reduced. Still further, a technical advantage of different embodiments of the invention may be considered to be the provision of robust locking arrangement immune to dust or material fragments.

The foregoing description provides non-limiting examples of some embodiments of the invention. Some of the features of the above-disclosed embodiments may be used to advantage without the use of other features.

As such, the foregoing description shall be considered as merely illustrative of the principles of the invention, and not in limitation thereof. Hence, the scope of the invention is only restricted by the appended patent claims.

## Claims

1. A locking arrangement for a processing apparatus of a processing plant (500), comprising
a first actuator (110) configured to raise and lower the processing apparatus;
a support element (120) on a side of the processing apparatus and comprising a plurality of slots (130) on different vertical heights;
a locking element (150);
a second actuator (160) configured to move the locking element (150) when actuated; **characterized in that**
the locking element (150) moved by the second actuator (160) is configured to engage a slot (130) of the plurality of slots so that the processing apparatus is locked at least in one direction, and **in that** the locking element (150) comprises a side locking element (180) configured to engage in a form fitting manner with at least a part of the support element in order to hinder sideways movement of the processing apparatus .

2. The locking arrangement of claim 1, wherein the first actuator (110) is configured to lower the processing apparatus in such a way that the locking element (150) is supported on the lower surface of a slot (130) of the plurality of slots in order to hinder downward movement of the processing apparatus.

3. The locking arrangement of claim 1, wherein the first actuator (110) is configured to lower the processing apparatus in such a way that the locking element (150) is supported on a beam connected to the support element (120) in order to hinder downward movement of the processing apparatus.

4. The locking arrangement of any preceding claim, wherein the lower surface of the slots (130) of the plurality of slots comprises a groove (170) configured to engage the locking bar (150) in a form fitting manner in order to hinder longitudinal movement of the processing apparatus.

5. The locking arrangement of any preceding claim, wherein the first actuator (110) is configured to hinder upward movement of the processing apparatus.

6. The locking arrangement of any preceding claim, wherein the side locking element (180) is formed as an integral part of the locking element (150).

7. The locking arrangement of any preceding claim, wherein the processing apparatus comprises a conveyor (100), a feeder or a screen.

8. The locking arrangement of any preceding claim, wherein the first and/or the second actuator is a hydraulic, electronic or pneumatic cylinder.

9. A mineral material processing plant (500) comprising a processing apparatus and a locking arrangement according to any preceding claim.

10. A mineral material processing plant (500) of claim 9, wherein the processing apparatus comprises a conveyor (100), a feeder or a screen.

11. A mineral material processing plant according to claim 9 or 10, wherein the mineral material processing plant comprises a mobile plant.

12. A method of locking a processing apparatus comprising a locking arrangement according to any of the claims 1 to 8, comprising
raising or lowering the processing apparatus with a first actuator (110); and
actuating a second actuator (160) in order to engage a locking element (150) with a slot of the plurality of slots of a support element (120) so that the processing apparatus is locked at least in one direction, wherein engaging the slot (130) of the plurality of slots comprises a side locking element (180) engaging in a form fitting manner with at least a part of the support element in order to hinder sideways movement of the processing apparatus.

13. The method of claim 12, further comprising lowering the processing apparatus with the first actuator (110) so that the locking element (150) is supported on the lower surface of the slot (130) of the plurality of slots.

14. The method of claim 12, further comprising lowering the processing apparatus with the first actuator (110) so that the locking element (150) is supported on a beam connected to the support element (120).

15. The method of any of the claims 12-14, wherein engaging the slot (130) comprises the locking element (150) engaging a groove (170) on the lower surface of the slot of the plurality of slots in a form fitting manner in order to hinder longitudinal movement of the processing apparatus.

16. The method of any of the claims 12-15, wherein the processing apparatus comprises a conveyor, a feeder or a screen.

## Patentansprüche

1. Eine Verriegelungsanordnung für eine Verarbeitungsvorrichtung einer Verarbeitungsanlage (500), umfassend
einen ersten Antrieb (110), der konfiguriert ist, die Verarbeitungsvorrichtung anzuheben und abzusenken;
ein Stützelement (120) auf einer Seite der Verarbeitungsvorrichtung und umfassend eine Vielzahl Aussparungen (130) auf unterschiedlichen vertikalen Höhen;
ein Verriegelungselement (150);
einen zweiten Antrieb (160), der konfiguriert ist, das Verriegelungselement (150) zu bewegen, wenn es betätigt wird; **gekennzeichnet dadurch, dass**
das Verriegelungselement (150), das durch den zweiten Antrieb (160) bewegt wird, konfiguriert ist, in eine Aussparung (130) der Vielzahl Aussparungen einzugreifen, so dass die Verarbeitungsvorrichtung verriegelt ist wenigstens in einer Richtung, und dadurch, dass das Verriegelungselement (150) umfasst ein seitliches Verriegelungselement (180), das konfiguriert ist, in einer formschlüssigen Art einzugreifen in wenigstens einen Teil des Stützelements, damit eine seitliche Bewegung der Verarbeitungsvorrichtung erschwert wird.

2. Verriegelungsanordnung nach Anspruch 1, wobei der erste Antrieb (110) konfiguriert ist, die Verarbeitungsvorrichtung derart abzusenken, dass das Verriegelungselement (150) gestützt ist auf der unteren Fläche einer Aussparung (130) der Vielzahl Aussparungen, damit Abwärtsbewegung der Verarbeitungsvorrichtung erschwert wird.

3. Verriegelungsanordnung nach Anspruch 1, wobei der erste Antrieb (110) konfiguriert ist, die Verarbeitungsvorrichtung derart abzusenken, dass das Verriegelungselement (150) gestützt ist auf einen Träger, der mit dem Stützelement (120) verbunden ist, damit Abwärtsbewegung der Verarbeitungsvorrichtung erschwert wird.

4. Verriegelungsanordnung nach einem vorhergehenden Anspruch, wobei die untere Fläche der Aussparungen (130) der Vielzahl Aussparungen eine Nut (170) umfasst, die konfiguriert ist, in die Verriegelungsstange (150) zu greifen in einer formschlüssigen Art, damit Längsbewegung der Verarbeitungsvorrichtung erschwert wird.

5. Verriegelungsanordnung nach einem vorhergehenden Anspruch, wobei der erste Antrieb (110) konfiguriert ist, eine Aufwärtsbewegung der Verarbeitungsvorrichtung zu erschweren.

6. Verriegelungsanordnung nach einem vorhergehenden Anspruch, wobei das seitliche Verriegelungselement (180) ausgebildet ist als integrales Teil des Verriegelungselements (150).

7. Verriegelungsanordnung nach einem vorhergehenden Anspruch, wobei die Verarbeitungsvorrichtung einen Förderer (100), einen Zuführer oder ein Sieb umfasst.

8. Verriegelungsanordnung nach einem vorhergehenden Anspruch, wobei der erste und / oder der zweite Antrieb ein hydraulischer, elektronischer oder pneumatischer Zylinder ist.

9. Mineralstoffverarbeitungsanlage (500), umfassend eine Verarbeitungsvorrichtung und eine Verriegelungsanordnung nach einem vorhergehenden Anspruch.

10. Mineralstoffverarbeitungsanlage (500) nach Anspruch 9, wobei die Verarbeitungsvorrichtung einen Förderer (100), einen Zuführer oder ein Sieb umfasst.

11. Mineralstoffverarbeitungsanlage nach Anspruch 9 oder 10, wobei die Mineralstoffverarbeitungsanlage eine mobile Anlage umfasst.

12. Verfahren zum Verriegeln einer Verarbeitungsvorrichtung, umfassend eine Verriegelungsanordnung nach einem der Ansprüche 1 bis 8, umfassend Anheben oder Absenken der Verarbeitungsvorrichtung mit einem ersten Antrieb (110); und Antreiben eines zweiten Antriebs (160), damit ein Verriegelungselement (150) in eine Aussparung der Vielzahl Aussparungen eines Stützelements (120) eingreift, so dass die Verarbeitungsvorrichtung verriegelt ist wenigstens in einer Richtung, wobei Greifen in die Aussparung (130) der Vielzahl Aussparungen umfasst ein seitliches Verriegelungselement (180), das in einer formschlüssigen Art eingreift in wenigstens ein Teil des Stützelements, damit eine seitliche Bewegung der Verarbeitungsvorrichtung erschwert wird.

13. Verfahren nach Anspruch 12, ferner umfassend Absenken der Verarbeitungsvorrichtung mit dem ersten Antrieb (110), so dass das Verriegelungselement (150) gestützt ist auf der unteren Fläche der Aussparung (130) der Vielzahl Aussparungen.

14. Verfahren nach Anspruch 12, ferner umfassend Absenken der Verarbeitungsvorrichtung mit dem ersten Antrieb (110), so dass das Verriegelungselement (150) gestützt ist auf einem Träger, der mit dem Stützelement (120) verbunden ist.

15. Verfahren nach einem der Ansprüche 12 bis 14, wobei Greifen in die Aussparung (130) umfasst das Verriegelungselement (150), das eingreift in eine Nut (170) auf der unteren Fläche der Aussparung der Vielzahl Aussparungen in einer formschlüssigen Art, damit Längsbewegung der Verarbeitungsvorrichtung erschwert wird.

16. Verfahren nach einem der Ansprüche 12 bis 15, wobei die Verarbeitungsvorrichtung einen Förderer, einen Zuführer oder ein Sieb umfasst.

## Revendications

1. Un agencement de verrouillage pour un appareil de traitement d'une installation de traitement (500), comprenant
un premier actionneur (110) configuré pour élever et abaisser l'appareil de traitement ;
un élément de support (120) sur un côté de l'appareil de traitement et comprenant une pluralité de fentes (130) sur différentes hauteurs verticales ; un élément de verrouillage (150) ;
un deuxième actionneur (160) configuré pour déplacer l'élément de verrouillage (150) lorsqu'il est actionné ; **caractérisé en ce que**
l'élément de verrouillage (150) déplacé par le deuxième actionneur (160) est configuré pour venir en engagement dans une fente (130) de la pluralité de fentes de sorte que l'appareil de traitement est verrouillé au moins dans une direction, et **en ce que** l'élément de verrouillage (150) comprend un élément de verrouillage latéral (180) configuré pour venir en engagement de manière ajustée avec au moins une partie de l'élément de support afin d'empêcher le mouvement latéral de l'appareil de traitement.

2. L'agencement de verrouillage selon la revendication 1, dans lequel le premier actionneur (110) est configuré pour abaisser l'appareil de traitement de telle sorte que l'élément de verrouillage (150) soit supporté sur la surface inférieure d'une fente (130) de la pluralité de fentes afin d'empêcher le mouvement vers le bas de l'appareil de traitement.

3. L'agencement de verrouillage selon la revendication 1, dans lequel le premier actionneur (110) est configuré pour abaisser l'appareil de traitement de telle sorte que l'élément de verrouillage (150) soit supporté sur une poutre reliée à l'élément de support (120) afin de gêner le mouvement vers le bas de l'appareil de traitement.

4. L'agencement de verrouillage selon l'une quelconque des revendications précédentes, dans lequel la surface inférieure des fentes (130) de la pluralité de fentes comprend une rainure (170) configurée pour venir en engagement avec la barre de verrouillage (150) d'une manière ajustée afin d'empêcher un mouvement longitudinal de l'appareil de traitement.

5. L'agencement de verrouillage selon l'une quelconque des revendications précédentes, dans lequel le premier actionneur (110) est configuré pour empêcher le mouvement vers le haut de l'appareil de traitement.

6. L'agencement de verrouillage selon l'une quelconque des revendications précédentes, dans lequel l'élément de verrouillage latéral (180) est formé en tant que partie intégrante de l'élément de verrouillage (150).

7. L'agencement de verrouillage selon l'une quelconque des revendications précédentes, dans lequel l'appareil de traitement comprend un convoyeur (100), un alimentateur ou un tamis.

8. L'agencement de verrouillage selon l'une quelconque des revendications précédentes, dans lequel le premier et / ou le deuxième actionneur est un vérin hydraulique, électronique ou pneumatique.

9. Une installation (500) de traitement de matières minérales comprenant un appareil de traitement et un dispositif de verrouillage selon l'une quelconque des revendications précédentes.

10. Une installation (500) de traitement de matières minérales selon la revendication 9, dans laquelle l'appareil de traitement comprend un convoyeur (100), un alimentateur ou un tamis.

11. Une installation de traitement de matières minérales selon la revendication 9 ou la revendication 10, dans laquelle l'installation de traitement de matières minérales comprend une installation mobile.

12. Un procédé de verrouillage d'un appareil de traitement comprenant un agencement de verrouillage selon l'une quelconque des revendications 1 à 8, comprenant
le fait de soulever ou d'abaisser l'appareil de traitement avec un premier actionneur (110) ; et
le fait d'actionner un deuxième actionneur (160) afin d'amener un élément de verrouillage (150) en engagement avec une fente de la pluralité de fentes d'un élément de support (120) de sorte que l'appareil de traitement soit verrouillé au moins dans une direction, la venue en engagement avec la fente (130) de la pluralité de fentes comprenant un élément de verrouillage latéral (180) venant en engageant de manière ajustée avec au moins une partie de l'élément de support afin d'empêcher le mouvement latéral de l'appareil de traitement.

13. Le procédé selon la revendication 12, comprenant en outre le fait d'abaisser l'appareil de traitement avec le premier actionneur (110) de sorte que l'élément de verrouillage (150) soit supporté sur la surface inférieure de la fente (130) de la pluralité de fentes.

14. Le procédé selon la revendication 12, comprenant en outre le fait d'abaisser l'appareil de traitement avec le premier actionneur (110) de sorte que l'élément de verrouillage (150) soit supporté sur une poutre reliée à l'élément de support (120).

15. Le procédé selon l'une quelconque des revendications 12 à 14, dans lequel l'engagement de la fente (130) comprend le fait que l'élément de verrouillage (150) vienne en engagement avec une rainure (170) sur la surface inférieure de la fente de la pluralité de fentes d'une manière ajustée afin d'empêcher un mouvement longitudinal de l'appareil de traitement.

16. Le procédé selon l'une quelconque des revendications 12 à 15, dans lequel l'appareil de traitement comprend un convoyeur, un alimentateur ou un tamis.
